# EUROPÄISCHE PATENTSCHRIFT

(11) **EP 1 277 005 B1**
(45) Veröffentlichungstag und Bekanntmachung des Hinweises auf die Patenterteilung: **17.11.2004**
(21) Anmeldenummer: 02735186.5
(22) Anmeldetag: 27.03.2002
(51) Int. Cl.: F16K 15/06

(54) **RÜCKFLUSSVERHINDERER**
RETURN CHECK VALVE
DISPOSITIF INHIBITEUR DE FLUX DE RETOUR

(30) Priorität: 29.03.2001 DE 10115588
(43) Veröffentlichungstag der Anmeldung: 22.01.2003
(73) Patentinhaber: Neoperl GmbH, 79379 Müllheim (DE)
(72) Erfinder: WEIS, Christoph, 79379 Müllheim (DE); FANGMEIER, Martin, 79424 Auggen (DE)
(74) Vertreter: Patent- und Rechtsanwaltssozietät, Maucher, Börjes & Kollegen
(86) Internationale Anmeldenummer: PCT/EP2002/003445
(87) Internationale Veröffentlichungsnummer: WO 2002/079678

(56) Entgegenhaltungen:
- EP-A- 0 291 375
- DE-A- 4 323 496
- DE-A- 19 650 031
- GB-A- 2 268 571
- US-A- 5 494 069

## Beschreibung

Die Erfindung betrifft einen Rückflußverhinderer mit einem Gehäuse, in dem ein Ventilsitz und ein zwischen einer Schließstellung und einer Offenstellung bewegbarer, mit einem Dichtbereich in Schließstellung am Ventilsitz anliegender Schließkörper angeordnet ist, wobei eine Einrichtung zum Druckausgleich bei geschlossenem Rückflußverhinderer und einem abströmseitig abgeschlossenen Fluidvolumen vorgesehen ist.

Rückschlagventile werden in Gas-, Wasser- oder dergleichen Versorgungsleitungen eingesetzt, um eine Rückströmung des Fluids entgegen der regelmäßigen Durchströmrichtung zu verhindern. So baut man Rückschlagventile zunehmend auch in Wasserleitungen ein, um im Falle eines Unterdrucks dem Eindringen von Schmutzwasser in die Frischwasserversorgungsleitung entgegenzuwirken.

Der Einsatz derartiger Rückschlagventile im Bereich von Einhebelmischbatterien bringt häufig jedoch das Problem mit sich, dass das Wasser, das beim Absperren der Kaltwasseroder Warmwasserseite zwischen dem geschlossenen Rückschlagventil einerseits und dem ebenfalls geschlossenen Ventilsitz andererseits eingeschlossen ist, durch äußere Einflüsse stark aufgeheizt wird, bis Systemdrücke entstehen, die zu Beschädigungen am schwächsten Teil der Versorgungsleitung und somit häufig am Rückschlagventil führen. Dies kann letztlich einen Verschluß der Versorgungsleitung oder einen ebenfalls unerwünschten Kreuzfluß zur Folge haben.

Man hat daher auch bereits ein Rückschlagventil der eingangs erwähnten Art geschaffen, dessen Gehäuse einen zuströmseitigen Teilbereich aufweist, der als Faltenbalg ausgestaltet ist und sich entgegen der Durchströmrichtung an einem in der Rohrleitung vorgesehenen Ringflansch abstützt (vgl. DE 196 50 031 A1) bei einer sich zwischen Einhebelmischbatterie und Rückschlagventil aufbauenden Innendruckerhöhung kann das Gehäuse somit in seinem als Faltenbalg ausgebildeten Teilbereich derart axial zusammengedrückt werden, daß eine Druckentlastung erfolgt. Um jedoch eine ausreichende Druckentlastung bewirken zu können, muß das Gehäuse einen vergleichsweise großen Querschnitt und/oder einen langen zusammendrückbaren Teilbereich aufweisen.

Man hat daher auf bereits einem Rückschlagventil geschaffen, das an seinem Schließkörper stirnseitig einen haubenförmigen Aufsatz mit einer seitlichen Austrittsöffnung trägt (vgl. WO 93/01 435). Der zur Austrittsöffnung des als Überdruckventil dienenden Aufsatzes führende By-Pass-Kanal ist mittels eines Ventilverschlußstückes verschlossen, das bei einer Innendruckerhöhung angehoben wird und dem durch den By-Pass-Kanal rückströmenden Fluid die Austrittsöffnung freigibt. Nachteilig ist jedoch, daß bei diesem Rückschlagventil eine Teilmenge des Fluids durch den Schließkörper hindurch zur Zuströmseite des Rückschlagventils zurückfließen kann.

Es besteht daher insbesondere die Aufgabe, einen Rückflußverhinderer der eingangs erwähnten Art zu schaffen, der sich durch eine gleichbleibende, übliche Einbaulänge auszeichnet und ein Zurückfließen des Fluids mit Sicherheit verhindert, wobei der Rückflußverhinderer auch einer übermäßigen Innendruckerhöhung wirkungsvoll entgegenwirken soll.

Die erfindungsgemäße Lösung dieser Aufgabe besteht bei dem Rückflußverhinderer der eingangs erwähnten Art insbesondere darin, daß der Rückflussverhinderer zumindest einen Druckausgleichsraum umfasst, der zur Aufnahme des abströmseitig abgeschlossenen Fluidvolumes bestimmt und mit dem durch den Schließkörper abströmseitig in Schließstellung begrenzten Raum hydraulisch oder pneumatisch verbunden ist, dass das Aufnahmevolumen des Druckausgleichsraumes/der Dauerausgleichsräume wenigstens dem Ausdehnungsvolumen des abgeschlossenen Fluids entspricht, und dass der zumindest eine Druckausgleichsraum außerhalb des durch den Schließkörper abströmseitig in Schließstellung begrenzten Raumes angeordnet ist.

Der erfindungsgemäße Rückflußverhinderer hat einen Druckausgleichsraum, der sich außerhalb des abströmseitig begrenzten Raumes befindet. Der durch den Schließkörper abströmseitig in Schließstellung begrenzte Raum ist an einen Druckausgleichsraum angeschlossen. Bei einer Innendruckerhöhung kann eine Teilmenge des sich ausdehnenden Fluids vorübergehend in den Druckausgleichsraum entweichen. Da das Aufnahmevolumen des Druckausgleichsraumes oder der Druckausgleichsräume etwa auf das Ausdehnungsvolumen des abgeschlossenen Fluids abgestimmt ist, ist eine ausreichende Druckentlastung möglich, um weiterführende druckbedingte Schäden, etwa am Rückflußverhinderer, zu vermeiden.

Dabei sieht eine bevorzugte Ausführungsform gemäß der Erfindung vor, daß der Druckausgleichsraum als Trennungswände eine den Schließkörper zuströmseitig zumindest bereichsweise überdeckende Beschichtung sowie den beschichteten Schließkörper-Bereich aufweist, und daß der Schließkörper einen Durchtrittskanal zwischen der Abströmseite und dem Druckausgleichsraum hat. Bei dieser Ausführungsform trägt der Schließkörper eine Beschichtung, die zwischen sich und dem beschichteten Schließkörper-Bereich den Druckausgleichsraum umgrenzt. In diesem Druckausgleichsraum mündet ein Durchtrittskanal, der zwischen der Abströmseite des Schließkörpers und dem Druckausgleichsraum vorgesehen ist. Bei einer Innendruckerhöhung kann eine Teilmenge des Fluids durch den Durchtrittskanal in den Druckausgleichsraum gelangen, wo sich die Beschichtung des Schließkörpers blasenförmig ausdehnt.

Dabei ist es vorteilhaft, wenn der Druckausgleichsraum polsterförmig ausgebildet und auf der Zuströmseite des Schließkörpers angeordnet und mit diesem vorzugsweise verbunden sowie über einen Durchtrittskanal an die Abströmseite angeschlossen ist.

Eine Weiterbildung der Erfindung von eigener schützwürdiger Bedeutung sieht vor, daß sich der polsterförmige Druckausgleichsraum über die der Zuströmseite zugewandten Seite des Schließkörpers und vorzugsweise über dessen seitlichen Dichtbereich hinaus erstreckt und in diesem Dichtbereich eine umlaufende Dichteinlage zwischen Schließkörper und einem Ventilsitz am Gehäuse bildet. Der polsterförmige und vorzugsweise durch eine Beschichtung des Schließkörpers gebildete Druckausgleichsraum erstreckt sich über den seitlichen Dichtbereich des Schließkörpers und bildet dort eine umlaufende Dichteinlage zwischen dem Schließkörper einerseits und dem gegenüberliegenden Ventilsitz andererseits. Bei einer Innendruckerhöhung erfolgt somit nicht nur eine Druckentlastung, - vielmehr wird der Schließkörper mit dieser Dichteinlage auch zunehmend gegen den Ventilsitz gepresst, so daß das Rückschlagventil auch hohen Drücken standzuhalten vermag.

Eine andere Ausführungsform gemäß der Erfindung sieht vor, daß der Druckausgleichsraum als zumindest die Innenseite des zuströmseitigen Gehäuseabschnittes bereichsweise überdeckende Ringmanschette ausgebildet ist, die über einen Durchtrittskanal an die Abströmseite angeschlossen ist. Bei dieser Ausführungsform ist eine Ringmanschette vorgesehen, die den zuströmseitigen Gehäuseabschnitt innenseitig bereichsweise überdeckt. Die Ringmanschette umgrenzt zwischen sich und der Gehäuseinnenwand einen Druckausgleichsraum, der über einen Durchtrittskanal mit der Abströmseite des Rückflußverhinderers verbunden ist.

Auch bei dieser Ausführungsform kann die Ringmanschette sich bis über den Bereich des Ventilsitzes erstrecken und in diesem dort eine umlaufende Dichteinlage zwischen dem Schließkörper und dem Ventilsitz am Gehäuse bilden.

Eine aus wenigen Teilen herstellbare Ausführungsform gemäß der Erfindung sieht vor, daß sich die Ringmanschette außen bis über einen Außendichtbereich erstreckt und dort eine Außenringdichtung bildet, bei der die Ringmanschette vorzugsweise einen Ringwulst aufweist.

Besonders vorteilhaft ist es, wenn die Wandung des Druckausgleichsraums aus elastischem Material, vorzugsweise aus Silikon, besteht. Besteht die Beschichtung des Schließkörpers, die Ringmanschette oder dergleichen Wandung des Druckausgleichsraumes aus Silikon oder einem anderen elastischen Material, so kann sich diese Wandung bei einer Erhöhung des Innendruckes blasenförmig ausdehnen.

Eine Weiterbildung gemäß der Erfindung von eigener schutzwürdiger Bedeutung sieht vor, daß der zum Druckausgleichsraum führende Durchtrittskanal mittels eines Verschlussstückes dicht verschlossen ist, und dass das Verschlussstück als Sollbruchstelle ausgebildet ist, eine Sollbruchstelle aufweist und/oder von einer Sollbruchstelle umgrenzt ist, welche den Durchtrittskanal bei Übersteigen eines definierten Fluiddrucks auf der Abströmseite des Schließkörpers öffnet. Bei dieser weiterbildenden Ausführungsform wird die zum Druckausgleichsraum führende Durchtrittsöffnung mittels eines Verschlußstückes dicht verschlossen. Übersteigt der Fluiddruck auf der Abströmseite des Schließkörpers einen definierten Grenzwert, wird die Durchtrittsöffnung im Bereich des Verschlußstückes an den Sollbruchstellen geöffnet. Somit schützt das Verschlußstück bis zu einem definierten Druckwert den Druckausgleichsraum, so daß dieser Druckausgleichsraum solange unbelastet bleibt, solange der Fluiddruck auf der Abströmseite des Schließkörpers nicht den definierten Grenzwert überschreitet.

Dabei ist es besonders vorteilhaft, wenn das Verschlußstück als Materialschwächung des Schließkörpers oder des Gehäuses im Bereich des Durchtrittskanals ausgestaltet ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen Rückflußverhinderer, dessen Schließkörper eine Beschichtung trägt, die zwischen sich und dem beschichteten Bereich des Schließkörpers einen Drucksausgleichsraum umgrenzt,
- Fig. 2: einen Rückflußverhinderer, bei dem der Druckausgleichsraum durch eine Ringmanschette gebildet ist, die am zuströmseitigen Gehäuseabschnitt innenseitig vorgesehen ist, und
- Fig. 3: einen beschichteten Schließkörper, der zwischen seinem beschichteten Schließkörper-Teilbereich und der aus elastischem Material bestehenden Beschichtung einen Druckausgleichsraum umgrenzt, wobei die zum Durchtrittsraum führende Durchtrittsöffnung mittels eines als Berstscheibe ausgebildeten Verschlußstückes dicht verschlossen ist, und wobei das Verschlußstück als eine als Sollbruchstelle dienende Materialschwächung des Schließkörpers ausgebildet ist, die bei Übersteigen eines definierten Flüssigkeitsdrucks auf der Abströmseite des Schließkörpers die Durchtrittsöffnung öffnet.

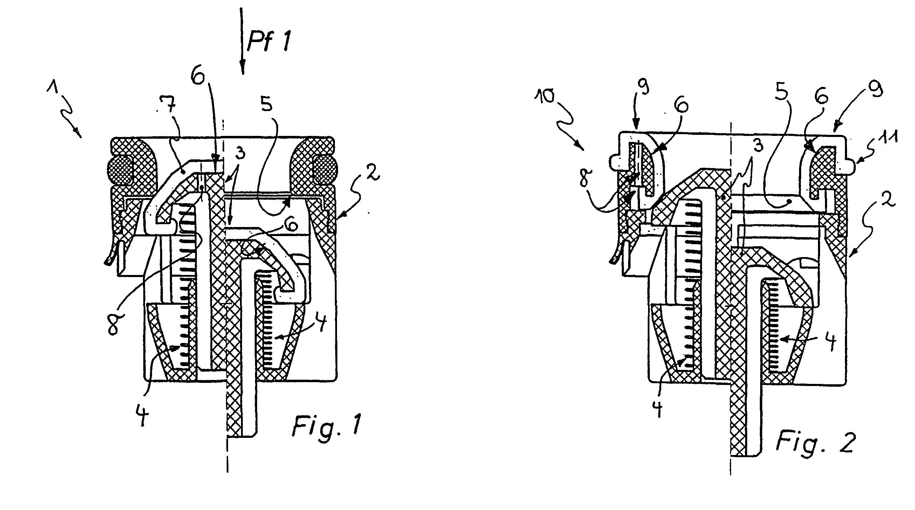

In den Figuren 1 und 2 sind zwei Rückflußverhinderer 1,10 vorgesehen, die im Bereich einer Wasserarmatur in einer Flüssigkeitsleitung einsetzbar sind. Die Rückflußverhinderer 1,10 können beispielweise als Kalt- oder Warmwasserrückschlagventil dienen, das auf der Kalt- oder Warmwasserseite einer Einhebelmischbatterie vorgeschaltet ist.

Die Rückflußverhinderer 1,10 weisen ein Gehäuse 2 auf, in dem ein in Durchströmrichtung Pf 1 zwischen einer Schließstellung und einer Offenstellung bewegbarer Schließkörper 3 vorgesehen ist. Der Schließkörper 3 ist von seiner jeweils links dargestellten Schließstellung aus gegen die Kraft einer Rückstellfeder 4 in die jeweils rechts dargestellte Offenstellung bewegbar. In der Schließstellung liegt der Schließkörper 3 der Rückflußverhinderer 1,10 an einem Ventilsitz 5 an.

Ist die Einhebelmischbatterie geschlossen, kann das zwischen dieser Wasserarmatur und dem Kalt- oder Warmwasserrückschlagventil 1,10 eingeschlossene Wasser sich beispielsweise oder durch eine Erhöhung der Umgebungstemperatur sich derart erwärmen oder aufheizen, daß ein extrem hoher Systemdruck entsteht. Damit dieser hohe Systemdruck nicht weitergehende Schäden zur Folge hat, weisen die Rückflußverhinderer 1,10 jeweils eine Einrichtung zum Druckausgleich auf.

Die Rückflußverhinderer 1,10 haben dazu wenigstens einen Druckausgleichsraum 6, an den der durch den Schließkörper 3 abströmseitig in Schließstellung begrenzte Raum angeschlossen ist.

Bei einer Innendruckerhöhung kann eine Teilmenge des sich ausdehnenden Fluids vorübergehend in den Druckausgleichsraum 6 entweichen. Da der Druckausgleichsraum 6 in seinem Aufnahmevolumen etwa auf das Ausdehnungsvolumen des abgeschlossenen Fluids abgestimmt ist, ist eine ausreichende Druckentlastung möglich, um weiterführende druckbedingte Schäden, etwa am Rückflußverhinderer 1,10, zu vermeiden.

Wie in Fig.1 erkennbar ist, weist der Schließkörper 3 zuströmseitig eine polsterförmige Beschichtung 7 oder dergleichen Materiallage auf, die zwischen sich und dem beschichteten Schließkörper-Bereich den Druckausgleichsraums 6 umgrenzt. Der Schließkörper 3 weist einen Durchtrittskanal 8 auf, der zwischen der Abströmseite des Schließkörpers 3 und dem Druckausgleichsraum 6 vorgesehen ist.

Bei einer Innendruckerhöhung kann eine Teilmenge des sich ausdehnenden Fluids durch den Durchtrittskanal 8 in den Druckausgleichsraum 6 eindringen, der sich mit zunehmendem Innendruck blasenförmig ausdehnt und damit eine Druckentlastung bewirkt.

Die polsterförmige Beschichtung 7 erstreckt sich über den seitlichen Dichtbereich des Schließkörpers 3 hinaus und bildet in diesem Dichtbereich eine umlaufende Dichteinlage zwischen Schließkörper 3 und Ventilsitz 5. Bei einer Innendruckerhöhung erfolgt somit nicht nur eine Druckentlastung, - vielmehr wird der Schließkörper 3 mit dieser Dichteinlage auch zunehmend gegen den Ventilsitz 5 gedrückt, so daß der Rückflußverhinderer 1 auch hohen Drücken standzuhalten vermag.

Bei dem in Fig.2 dargestellten Rückflußverhinderer 10 ist der Druckausgleichsraum 6 durch eine Ringmanschette 9 gebildet, welche die Innenseite des zuströmseitigen Gehäuseabschnittes überdeckt. Die Begrenzungswände des Druckausgleichsraumes 6 sind hier durch die Ringmanschette 9 sowie die benachbarte Gehäuseinnenwand gebildet. Auch der Druckausgleichsraum 6 des in Fig.2 dargestellten im Rückflußverhinderers 10 ist über einen Durchtrittskanal 8 an die Abströmseite des Rückflußverhinderers 10 angeschlossen.

Wie aus Fig.2 deutlich wird, erstreckt sich die Ringmanschette 9 an ihrem einen Umfangsrand bis über den Bereich des Ventilsitzes 5 und bildet dort somit eine umlaufende Dichteinlage zwischen dem Schließkörper 3 und dem am Gehäuse 2 vorgesehenen Ventilsitz 5.

Die Ringmanschette 9 erstreckt sich mit ihrem anderen Umfangsrand bis über den Außendichtbereich des Rückflußverhinderers 10 und bildet dort eine Außenringdichtung, welche das Gehäuse des Rückflußverhinderers mit einem Ringwulst 11 gegenüber der hier nicht weiter dargestellten Rohrleitung abdichtet.

Da die Ringmanschette 9 des in Fig. 2 dargestellten Rückflußverhinderers 10 und die Beschichtung 7 bei dem in Fig. 1 gezeigten Rückflußverhinderer aus Silikon oder einem anderen elastischen Material bestehen, liegt die den Druckausgleichsraum 6 umgrenzende Wandung gut an, um sich bei einer Erhöhung des Systemdrucks bis über 16 bar hinaus blasenförmig auszudehnen.

Bei einer hier nicht weiter dargestellten Ausführungsform gemäß der Erfindung kann der Rückflußverhinderer nicht nur eine Ringmanschette 9 aufweisen, sondern an seinem Schließkörper 3 zusätzlich auch eine Beschichtung 7 tragen.

Die hier dargestellten Rückflußverhinderer sind insbesondere zum Einsatz in Thermostatarmaturen vorgesehen. Da eine Teilmenge des sich während des Erhitzens ausdehnenden Fluids im Druckausgleichsraum 6 aufgenommen wird und dort eine elastische Blase bildet, und da diese Teilmenge des Fluids nach Abklingen des Innendrucks wieder in die Rohrleitung zurückströmen kann, wird eine Kontamination des Trinkwassers mit Sicherheit vermieden. Dabei können die Ringmanschetten 9 oder die Beschichtungen 7 an ihren Umfangsrändern am Gehäuse beziehungsweise am Schließkörper 3 fest montiert beziehungsweise angespritzt, angeklebt, angeschweißt oder sonst wie unlösbar gehalten sein. Auch ist es möglich, das Gehäuse und/oder den Schließkörper als Mehrkomponenten-Spritzgußteil herzustellen, bei dem eine der Komponenten die Ringmanschette 9 beziehungsweise die Materiallage 7 bildet. Durch die Ausgestaltung der Ringmanschetten 9, beziehungsweise der Beschichtungen 7 und die Materialwahl lassen sich die benötigten Druckausgleichsräume an das zu erwartende Fluidvolumen und dessen Druck anpassen.

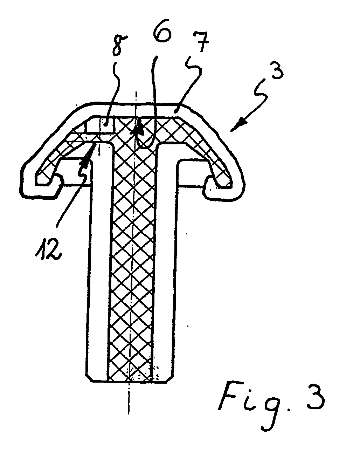

In Fig.3 ist ein beschichteter Schließkörper 3 dargestellt, der mit dem Schließkörper 3 des in Fig.1 gezeigten Rückflußverhinderers 1 vergleichbar ist. Auch der Schließkörper 3 gemäß Fig.3 umgrenzt zwischen seinem beschichteten Schließkörper-Teilbereich und der Beschichtung 7 einen Druckausgleichsraum 6. Der Schließkörper 3 gemäß Fig.3 weist ebenfalls einen Durchtrittskanal 8 auf, der zwischen der Abströmseite des Schließkörpers 3 und dem Druckausgleichsraum 6 vorgesehen ist. Dabei ist der Durchtrittskanal 8 mittels eines als Berstscheibe ausgestalteten Verschlußstückes 12 dicht verschlossen. Das Verschlußstück 12 ist als eine als Sollbruchstelle dienende Materialschwächung des Schließkörpers 3 ausgestaltet und öffnet den Durchtrittskanal 8 bei Übersteigen eines definierten Fluiddrucks auf der Abströmseite des Schließkörpers. Bis zu diesem definierten Grenzwert schützt das Verschlußstück 12 die als Silikonmembrane ausgestaltete Beschichtung 7, was beispielsweise für Prüfungen in Prüfinstituten, bei denen 50.000 mal 16 bar Rückdruck auf den Schließkörper 3 aufgebracht wird, sinnvoll sein kann. Ist das Verschlußstück 12 dabei auf einen Grenzwert von ca. 20 bar ausgelegt, wird die den Druckausgleichsraum 6 begrenzende Silikonmembrane oder dergleichen Beschichtung 7 infolge der mit geringeren Drücken durchgeführten Prüfungen nicht weiter belastet. Wird der definierte Grenzwert in einem Thermostateinsatzfall, bei dem auch hohe Drücke sehr schnell erreicht werden, überschritten, versagt das Verschlußstück 12 gezielt, so daß der auf der Abströmseite des Schließkörpers 3 vorherrschende Druck wieder rasch abgebaut wird.

Ein vergleichbares Verschlußstück kann selbstverständlich auch im Durchtrittskanal 8 des in Fig.2 dargestellten Rückflußverhinderers 10 vorgesehen sein.

## Patentansprüche

1. Rückflußverhinderer (1,10) mit einem Gehäuse (2), in dem ein Ventilsitz (5) und ein zwischen einer Schließstellung und einer Offenstellung bewegbarer, mit einem Dichtbereich in Schließstellung am Ventilsitz (5) anliegender Schließkörper (3) angeordnet ist, wobei eine Einrichtung zum Druckausgleich bei geschlossenem Rückflußverhinderer (1,10) und einem abströmseitig abgeschlossenen Fluidvolumen vorgesehen ist, **dadurch gekennzeichnet, daß** der Rückflussverhinderer (1,10) zumindest einen Druckausgleichsraum (6) umfasst, der zur Aufnahme des abströmseitig abgeschlossenen Fluidvolumens bestimmt und mit dem durch den Schließkörper (3) abströmseitig in Schließstellung begrenzten Raum hydraulisch oder pneumatisch verbunden ist, dass das Aufnahmevolumen des Druckausgleichsraumes (6)/der Druckausgleichsräume wenigstens dem Ausdehnungsvolumen des abgeschlossenen Fluids entspricht, und dass der zumindest eine Druckausgleichsraum (6) außerhalb des durch den Schließkörper (3) abströmseitig in Schließstellung begrenzten Raumes angeordnet ist.

2. Rückflußverhinderer nach Anspruch 1, **dadurch gekennzeichnet, daß** der Druckausgleichsraum (6) als Begrenzungswände eine den Schließkörper (3) zuströmseitig zumindest bereichsweise überdeckende Beschichtung (7) sowie den beschichteten Schließkörper-Bereich aufweist und daß der Schließkörper (3) einen Durchtrittskanal (8) zwischen der Abströmseite und dem Druckausgleichsraum (6) aufweist.

3. Rückflußverhinderer nach Anspruch 1 oder 2, **dadurch gekennzeichnet, daß** der Druckausgleichsraum (6) polsterförmig ausgebildet und auf der Zuströmseite des Schließkörpers (3) angeordnet und mit diesem verbunden sowie über einen Durchtrittskanal (8) an die Abströmseite angeschlossen ist.

4. Rückflußverhinderer nach Anspruch 3, **dadurch gekennzeichnet, daß** sich der polsterförmige Druckausgleichsraum (6) über die der Zuströmseite zugewandte Seite des Schließkörpers (3) und bis über dessen seitlichen Dichtbereich hinaus erstreckt und in diesem Dichtbereich eine umlaufende Dichteinlage zwischen Schließkörper (3) und einem Ventilsitz (5) am Gehäuse (2) bildet.

5. Rückflußverhinderer nach einem der Ansprüche 1 bis 4, **dadurch gekennzeichnet, daß** der Druckausgleichsraum (6) als zumindest die Innenseite des zuströmseitigen Gehäuseabschnittes bereichsweise überdeckende Ringmanschette (9) ausgebildet ist, die über einen Durchtrittskanal (8) an die Abströmseite angeschlossen ist.

6. Rückflußverhinderer nach Anspruch 5, **dadurch gekennzeichnet, daß** sich die Ringmanschette (9) bis über den Bereich des Ventilsitzes (5) erstreckt und in diesem dort eine umlaufende Dichteinlage zwischen dem Schließkörper (3) und dem Ventilsitz (5) am Gehäuse (2) bildet.

7. Rückflußverhinderer nach einem der Ansprüche 5 oder 6, **dadurch gekennzeichnet, daß** sich die Ringmanschette (9) außen bis über einen Außendichtbereich erstreckt und dort eine Außenringdichtung bildet, bei der die Ringmanschette vorzugsweise einen Ringwulst (11) aufweist.

8. Rückflußverhinderer nach einem der Ansprüche 1 bis 7, **dadurch gekennzeichnet, daß** die Wandung des Druckausgleichsraums (6) aus elastischem Material, vorzugsweise aus Silikon, besteht.

9. Rückflußverhinderer nach einem der Ansprüche 1 bis 8, **dadurch gekennzeichnet, daß** der zum Druckausgleichsraum (6) führende Durchtrittskanal (8) mittels eines Verschlussstückes (12) dicht verschlossen ist, und dass das Verschlussstück (12) als Sollbruchstelle ausgestaltet ist, eine Sollbruchstelle aufweist und/oder von einer Sollbruchstelle umgrenzt ist, welche den Durchtrittskanal (8) bei Übersteigen eines definierten Fluiddrucks auf der Abströmseite des Schließkörpers (3) öffnet.

10. Rückflussverhinderer nach Anspruch 9, **dadurch gekennzeichnet, dass** das Verschlusstück (12) als Materialschwächung des Schließkörpers (3) oder des Gehäuses (2) im Bereich des Durchtrittskanals (8) ausgestaltet ist.

## Claims

1. Return check valve (1, 10) having a housing (2) in which are mounted a valve seat (5) and a closure member (3) which is movable between a closed position and an open position and which bears on the valve seat (5) with a sealing region in the closed position, means being provided for equalising the pressure when the return check valve (1, 10) is closed and a volume of fluid is shut off on the outflow side, **characterised in that** the return check valve (1, 10) comprises at least one pressure equalisation chamber (6) which is intended to receive the volume of fluid shur off on the outflow side and is hydraulically or pneumatically connected to the chamber bounded by the closure member (3) on the outflow side in the closed position, **in that** the capacity of the pressure equalisation chamber(s) (6) corresponds at least to the expansion volume of the shut off fluid and **in that** the minimum of one pressure equalisation chamber (6) is disposed outside the chamber bounded by the closure member (3) on the outflow side in the closed position.

2. Return check valve according to claim 1, **characterised in that** the pressure equalisation chamber (6) comprises, as boundary walls, a coating which at least partly covers the closure member (3) on the inflow side, and the coated region of the closure member, and **in that** the closure member (3) has a throughflow channel (8) between the outflow side and the pressure equalisation chamber (6).

3. Return check valve according to claim 1 or 2, **characterised in that** the pressure equalisation chamber (6) is cushion-shaped and is disposed on the inflow side of the closure member (3) and is connected thereto and connected to the outflow side via a throughflow channel (8).

4. Return check valve according to claim 3, **characterised in that** the cushion-shaped pressure equalisation chamber (6) extends over the side of the closure member (3) facing the inflow side and beyond the lateral sealing region thereof and in this sealing region forms an encircling sealing insert betwcen the closure member (3) and a valve seat (5) on the housing (2).

5. Return check valve according to one of claims 1 to 4, **characterised in that** the pressure equalisation chamber (6) is constructed as an annular sleeve (9) which partially covers at least the inside of the housing portion on the inflow side and is connected to the outflow side via a throughflow channel (8).

6. Return check valve according to claim 5, **characterised in** thar the annular sleeve (9) extends beyond the area of the valve seat (5) and therein forms an encircling sealing insert between the closure member (3) and the valve seat (5) on the housing (2).

7. Return check valve according to one of claims 5 and 6, **characterised in that** the annular sleeve (9) extends outwards beyond an outer sealing region and there forms an outer annular seal in which the annular sleeve preferably comprises an annular bead (11).

8. Return check valve according to one of claims 1 to 7, **characterised in that** the wall of the pressure equalisation chamber (6) consists of resilient material, preferably silicon.

9. Return check valve according to one of claims 1 to 8, **characterised in that** the throughflow channel (8) leading to the pressure equalisation chamber (6) is tightly sealed by means of a sealing member (12) and **in that** the sealing member (12) is constructed as a frangible point, has a frangible point and/or is bounded by a frangible point which opens up the throughflow channel (8) when a defined fluid pressure is exceeded on the outflow side of the closure member (3).

10. Return check valve according to claim 9, **characterised in that** the sealing member (12) is constructed as a weakened area in the closure member (3) or housing (2) in the region of the throughflow channel (8).

## Revendications

1. Dispositif antiretour (1, 10) avec un boîtier (2) dans lequel sont logés un siège de clapet (5) et un élément de fermeture (3) mobile entre une position fermée et une position ouverte, comportant une zone d'étanchéité reposant en position fermée sur le siège de clapet (5), dans lequel il est prévu un dispositif de compensation de pression lorsque le dispositif antiretour (1, 10) est fermé et un volume de fluide confiné côté sortie de flux, **caractérisé par le fait que** le dispositif antiretour (1, 10) comprend au moins une chambre de compensation de pression (6) qui est destinée à recevoir le volume de fluide confiné côté sortie de flux et qui est en communication hydraulique ou pneumatique avec la chambre limitée côté sortie de flux en position fermée par l'élément de fermeture (3), que le volume de réception de la chambre de compensation de pression (6) ou des chambres de compensation de pression correspond au moins au volume de dilatation du fluide confiné, et que la ou les chambre(s) de compensation de pression (6) est/sont disposée(s) en dehors de la chambre limitée côté sortie de flux en position fermée.

2. Dispositif antiretour selon la revendication 1, **caractérisé par le fait que** la chambre de compensation de pression (6) présente en guise de parois de délimitation un revêtement (7) recouvrant au moins en partie l'élément de fermeture (3) côté arrivée de flux ainsi que la partie revêtue de l'élément de fermeture (3), et que l'élément de fermeture (3) présente un canal de passage (8) entre le côté sortie de flux et la chambre de compensation de pression (6).

3. Dispositif antiretour selon la revendication 1 ou 2, **caractérisé par le fait que** la chambre de compensation de pression (6) est en forme de coussin et disposée du côté arrivée de flux de l'élément de fermeture (3), reliée à ce dernier et en communication avec le côté sortie de flux par un canal de passage (8).

4. Dispositif antiretour selon la revendication 3, **caractérisé par le fait que** la chambre de compensation de pression (6) en forme de coussin s'étend sur le côté de l'élément de fermeture (3) tourné vers le côté arrivée de flux jusqu'au-delà de sa zone d'étanchéité latérale et forme dans cette zone d'étanchéité une couche d'étanchéité périphérique entre l'élément de fermeture (3) et un siège de clapet (5) sur le boîtier (2).

5. Dispositif antiretour selon l'une des revendications 1 à 4, **caractérisé par le fait que** la chambre de compensation de pression (6) est formée comme une manchette annulaire (9) recouvrant en partie au moins le côté intérieur de la partie de boîtier côté arrivée de flux, laquelle manchette est en communication avec le côté sortie de flux par un canal de passage (8).

6. Dispositif antiretour selon la revendication 5, **caractérisé par le fait que** la manchette annulaire (9) s'étend jusqu'au-dessus de la zone du siège de clapet (5) et y forme une couche d'étanchéité périphérique entre l'élément de fermeture (3) et le siège de clapet (5) sur le boîtier (2).

7. Dispositif antiretour selon l'une des revendications 5 ou 6, **caractérisé par le fait que** la manchette annulaire (9) s'étend à l'extérieur jusqu'au-dessus d'une zone d'étanchéité extérieure et y forme un joint annulaire extérieur sur lequel la manchette annulaire présente de préférence un bourrelet annulaire (11).

8. Dispositif antiretour selon l'une des revendications 1 à 7, **caractérisé par le fait que** la paroi de la chambre de compensation de pression (6) est en matériau élastique, de préférence en silicone.

9. Dispositif antiretour selon l'une des revendications 1 à 8, **caractérisé par le fait que** le canal de passage (8) menant à la chambre de compensation de pression (6) est fermé hermétiquement au moyen d'un obturateur (12) et que l'obturateur (12) est formé par une zone de rupture, présente une zone de rupture et/ou est délimité par une zone de rupture qui ouvre le canal de passage (8) en cas de dépassement d'une pression de fluide définie du côté sortie de flux de l'élément de fermeture (3).

10. Dispositif antiretour selon la revendication 9, **caractérisé par le fait que** l'obturateur (12) est formé par un affaiblissement du matériau de l'élément de fermeture (3) ou du boîtier (2) au niveau du canal de passage (8).
